# EUROPÄISCHE PATENTSCHRIFT

(11) **EP 0 653 350 B1**
(45) Veröffentlichungstag und Bekanntmachung des Hinweises auf die Patenterteilung: **15.10.1997**
(21) Anmeldenummer: 94117732.1
(22) Anmeldetag: 10.11.1994
(51) Int. Cl.: B64D 1/14

(54) **Container für den Lufttransport**
Container for air transport
Conteneur pour le transport aerien

(30) Priorität: 16.11.1993 DE 4339052
(43) Veröffentlichungstag der Anmeldung: 17.05.1995
(73) Patentinhaber: Haro, Jürgen, 37627 Stadtoldendorf (DE)
(72) Erfinder: Haro, Jürgen, 37627 Stadtoldendorf (DE)
(74) Vertreter: Lins, Edgar, Dipl.-Phys. Dr.jur.

(56) Entgegenhaltungen:
- DE-A- 4 118 300
- US-A- 3 266 757
- US-A- 3 333 643
- US-A- 3 387 805
- US-A- 5 108 046
- PATENT ABSTRACTS OF JAPAN vol. 17, no. 610 (M-1508) 10. November 1993 & JP-A-05 185 993 (NISSAN MOTOR CO LTD) 27. Juli 1993

## Beschreibung

Die Erfindung betrifft einen Container für den Lufttransport und zum gezielten Abwerfen, für das der Container mit einem Bremssystem und mit einer Lenkeinrichtung in Form von seitlich vom Container abstellbaren Klappen versehen ist.

In vielen Anwendungsfällen ergibt sich das Bedürfnis, Gegenstände, Lebensmittel o. dgl. von einem Flugzeug aus abzuwerfen, um beispielsweise Menschen in Kriegsgebieten, unwegsamen Geländen usw. mit Lebensmitteln, Arzneimitteln, Zelten o. dgl. zu versorgen. Hierfür ist es bekannt, Container mit Lastfallschirmen aus zum Teil großer Höhe abzusetzen. Die in dem Container transportierten Gegenstände und Lebensmittel müssen dabei stoßabsorbierend gelagert werden, um den Aufprall in noch verwendbarer Form zu überstehen.

Der größte Nachteil des Abwurfes von Containern besteht darin, daß die Fallschirme ggf. stark abgetrieben werden, so daß die Hilfsgüter usw. unter Umständen auf einer großen Fläche verteilt aufschlagen und daher nicht alle an die gewünschten Empfänger gelangen. Aus jüngeren Hilfsgüterabwürfen in Kriegsgebieten ist es bekannt, daß nicht einmal 50 % der abgeworfenen Hilfsgüter die bedürftigen Menschen erreichen konnten. Die Abwurfaktionen waren daher mit hohen Verlusten an Hilfsgütern und Materialien verbunden.

Durch US-A-3 333 643 ist es bekannt, den Lastfallschirm durch ein Rotorsystem zu ersetzen, das sich während des Falls des Containers aufstellt und durch die Luftströmung beim Fallen in Rotation versetzt wird. Durch eine hydraulisch betätigte Verstellung der Rotorachse kann dabei der Fall in einen seitlichen Gleitflug geändert werden. Zur Stabilisierung der seitlichen Bewegung des Containers ist dieser mit Richtungsflossen versehen. Die Verstellung der Rotorachse kann durch Funk oder durch ein vorgegebenes Programm gesteuert werden.

Ein Container der eingangs erwähnten Art ist durch US-A-3 387 805 bekannt, in der ein mit einem Fallschirm als Bremssystem abzuwerfender Container beschrieben ist. Zum schonenden Transport der in dem Container enthaltenen Gegenstände oder Personen ist einerseits die Aufhängung des Fallschirms an dem Container in besonderer Weise flexibel ausgestaltet, andererseits der Container mit teleskopartig zusammenschiebbaren Beinen versehen, die die Landung des Containers dämpfen sollen. Das Gehäuse des Containers ist mit hydraulisch seitlich abstellbaren Klappen versehen, die einen Lenkeinfluß auf den Fall des Containers haben sollen. Die abgestellten Klappen haben darüber hinaus einen den Fall verlangsamen Effekt. Sie dienen darüber hinaus zum Be- und Entladen des Containers. Eine Betätigung der Klappen während des Falls ist nicht erwähnt, allenfalls durch eine im Container transportierte Person möglich.

Durch JP-A-5 185 993 ist ein Gleitfallschirm bekannt, dessen seitliche Bewegungen mit Hilfe eines Navigationssystems steuerbar sind, um den Gleitfallschirm zu einem gewünschten Landepunkt zu leiten. Der Abwurf von Containern mit einem derartigen Gleitfallschirm ist weder vorgeschlagen noch praktikabel.

Der Erfindung liegt die Aufgabe zugrunde, einen für den Lufttransport und zum gezielten Abwerfen vorgesehenen Container in einfacher und preiswerter Weise so auszubilden, daß die Verluste bei Abwürfen von Hilfsgütern o. ä. verringert und die Anwendungsbereiche für Abwürfe aus Flugzeugen erweitert wird.

Zur Lösung dieser Aufgabe ist ein Container der eingangs erwähnten Art dadurch gekennzeichnet, daß die Klappen mit so großen Flächen von den Containerwänden wegragen, daß sie das Bremssystem des Containers bilden, und daß der Container mit einer Steuerung versehen ist, die ein Navigationssystem und Betätigungsmittel für die Winkelstellung der Klappen zur zielgenauen Korrektur der Fallrichtung durch seitliche Richtungsänderungen während des gebremsten Falls des Containers in Abhängigkeit von den Ausgangssignalen des Navigationssystems aufweist.

Der Erfindung liegt die Erkenntnis zugrunde, daß Satelliten-Navigationssysteme in preiswerter Ausführung und mit geringen Abmessungen zur Verfügung stehen, die während des gesamten Abwurfs des Containers die Fallrichtung korrigieren und so bei einer ausreichend leistungsfähigen Lenkeinrichtung zu einer Zielgenauigkeit führen, die eine Streuung des Auftreffpunktes um maximal 50 m bewirkt. Hierzu ist zweckmäßig, daß der Container mit der Lenkeinrichtung in wenigstens 4 Richtungen seitlich mit den Betätigungsmitteln steuerbar ist.

Erfindungsgemäß sind die sich von den Seiten des Containers weg erstreckenden Klappen zugleich als Bremssystem ausgebildet, indem sie mit einer relativ großen Fläche seitlich von den Containerwänden wegragen. Auch in dem Fall ist die Verwendung eines Fallschirms zweckmäßig, daß dieser für eine schnelle Ausrichtung des Containers in eine stabile Fallage sorgt. Darüber hinaus kann der Fallschirm als zusätzliches, die Sicherheit vergrößerndes Bremssystem eingesetzt werden.

Besonders vorteilhaft ist es, wenn der Container nicht nur mit einem Bremssystem versehen ist, sondern an seiner Unterseite ferner einen unter höchstens einem geringen Überdruck stehenden großvolumigen Schockabsorber aufweist. Dieser Schockabsorber ist vorzugsweise durch eine unten offene überdrucklose Plane gebildet, die von einem aufblasbaren Stützgerüst in einer nach unten konvex gewölbten Form gehalten wird. Die Plane schließt dabei ein relativ großes Luftvolumen ein, das beim Aufsetzen des Containers auf den Untergrund komprimiert wird. Zweckmäßigerweise ist die Plane, vorzugsweise im oberen Bereich, mit Luftauslaßlöchern versehen, die als runde Öffnungen oder als Schlitze ausgebildet sein können, durch die die Luft gebremst entweicht, wodurch es zu der gewünschten Dämpfung des Aufpralls des Containers auf dem Boden kommt. Hierbei ist es zweckmäßig, wenn das aufblasbare Stützgerüst mit einem so geringen Überdruck aufgeblasen ist, daß es zwar die Plane in der konvex gewölbten Form hält, beim Aufprall jedoch schnell kollabiert. Dadurch wird erreicht, daß das Stützgerüst die Aufpralldämpfung durch die aus luftdichtem Material bestehende Plane nicht behindert.

In einer alternativen Ausführungsform kann der Schockabsorber aus einem ggf. mehrteiligen ringförmigen Schlauch mit großem Querschnitt und vorzugsweise mit Luftaustrittsöffnungen bestehen, der einen nur geringen Überdruck aufweist und beim Aufsetzen durch seine Verförmung seitlich nach oben ausweichen kann.

Aus Gründen der Lagestabilisierung ist es zweckmäßig, wenn die Klappen im wesentlichen in der oberen Hälfte des Containers oder sogar über dem Container wirksam sind. Dabei können die Klappen auch am oberen Rand des Containers angelenkt sein. Wird beispielsweise ein Fallschirm als Bremssystem verwendet, können die Klappen klein und einfach ausgebildet sein und praktisch ausschließlich eine Lenkfunktion ausüben. Die Klappen können so ausgebildet sein, daß sie durch den Fahrtwind des fallenden Containers geöffnet werden.

Die zugleich als Bremssystem ausgebildeten Klappen sind auf allen vier Seiten des Containers vorzugsweise mehrteilig ausgebildet und erlauben so differenziert ausgeführte Steuerungen. Zur Erhöhung der Bremswirkung können die Klappen mit die Luftströmung verwirbelnden Einrichtungen versehen sein, beispielsweise mit Löchern und Schlitzen oder mit beschichtetem Gewebe an ihren Enden.

Ein leichter wirksamer Aufbau ergibt sich, wenn die Klappen jeweils aus Gestellteilen aus einem stabilen Leichtmaterial, wie Leichtmetall, faserverstärkter Kunststoff, Kevlar o. dgl. bestehen und mit einem stabilen Gewebe (beispielsweise ebenfalls aus Kevlar), das ggf. luftdicht beschichtet ist, bestehen.

Zweckmäßig ist es in jedem Fall, wenn die Zwischenräume zwischen den Klappen durch ein flexibles Gewebe überspannt sind. Dieses Gewebe sorgt für eine Erhöhung der Bremswirkung, nimmt aber am Lenkvorgang zweckmäßigerweise nicht teil.

Der erfindungsgemäße Container kann unter Verwendung des Schockabsorbersystems schonend auf dem Boden aufgesetzt werden und steht daher für zahlreiche erneute Verwendungen zur Verfügung. Hierbei ist es zweckmäßig, wenn alle an ihm befestigten Teile in einem Transportzustand an ihm anliegen, wenn also die Klappen auf die Wände des Containers klappbar sind. Dabei kann auch der Container selbst zusammenlegbar sein und im zusammengelegten Zustand die an ihm befestigten Teile raumsparend und schonend aufnehmen. Das flexible Gewebe, das die Zwischenräume zwischen den Klappen im Bereich der Ecken des Containers überspannt, läßt sich dabei sorgfältig einfalten. Fallschirm und Schockabsorber können zweckmäßigerweise abmontiert und im Innern des zusammengelegten Containers verstaut werden.

Der Container ist zweckmäßigerweise mit an ihm befestigten optischen und/oder akustischen Signaleinrichtungen versehen, die in einem unwegsamen Gelände sein Auffinden erleichtern bzw. die den Container annehmenden Personen warnen.

Die Betätigungsmittel für die Lenkeinrichtung können hydraulisch, pneumatisch oder elektrisch wirken. Gegebenenfalls kann die Bewegungsenergie auch aus der Luftströmung während des Falles gewonnen werden.

Der erfindungsgemäße Container, der mit bremsenden Klappen und einem zusätzlichen Bremsfallschirm sowie einer Schockabsorbereinrichtung an seiner Unterseite versehen ist, erlaubt einen Abwurf aus beliebiger Höhe, ein zielgenaues Auftreffen und eine praktisch stoßfreie Landung. Aufgrund dieser Eigenschaften ist der Container auch geeignet, Personen aus dem Flugzeug abzusetzen und so den riskanten Fallschirm-Einzelabsprung von Personen aus einem Flugzeug zu ersetzen. Dies hat insbesondere Vorteile für das Absetzen von Menschen in Kriegsgebieten, wo mit einem Beschuß der abgesetzten Menschen gerechnet werden muß. Das Risiko für die abgesetzten Personen wird durch den ggf. vor Beschuß schützenden Container wesentlich verringert.

Die Erfindung soll im folgenden anhand eines in der Zeichnung dargestellten Ausführungsbeispiels näher erläutert werden. Es zeigen:
- Figur 1 -: einen an einem Fallschirm hängenden Container mit einer Schockabsorptionseinrichtung und Steuerklappen in Seitenansicht
- Figur 2 -: eine schematische Ansicht der Steuerklappenanordnung von unten.

Die Zeichnung läßt einen rechteckigen Container 1 erkennen, der mit einer Seilanordnung 2 an einem Lastenfallschirm 3 hängt.

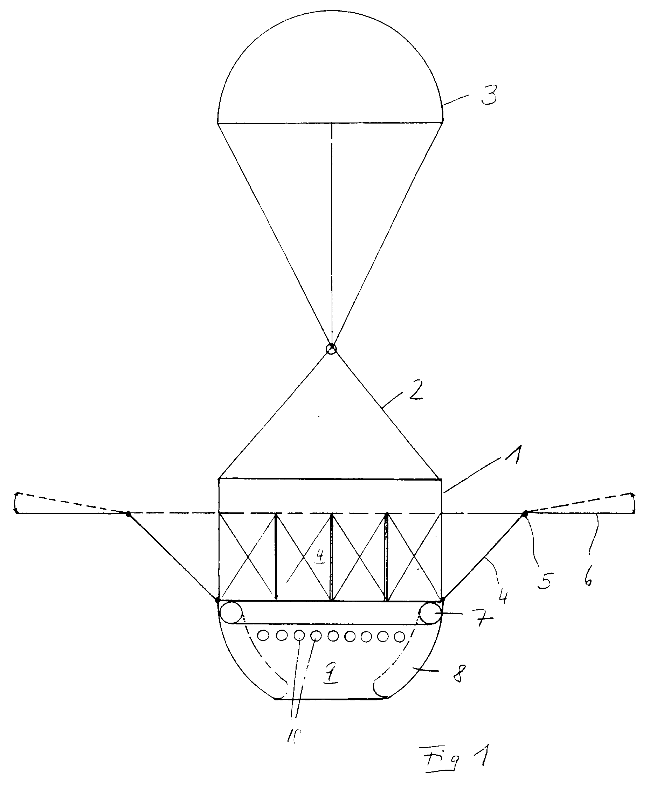

An allen vier Seiten des Containers 1 sind im Bodenbereich Klappen 4 angelenkt, die sich schräg nach oben erstrecken und mit ihren vom Container 1 wegzeigenden Enden, an denen sich Drehgelenke 5 befinden, über der halben Höhe des Containers 1 befinden. An den Drehgelenken 5 sind etwa horizontal stehende Klappen 6 angelenkt, deren Winkelstellung veränderbar ist, wie dies in Figur 1 gestrichelt angedeutet ist.

In dem in Figur 1 dargestellten Ausführungsbeispiel sind die Klappen 4 ortsfest ausgerichtet und nur die äußeren Klappen 6 in ihrer Winkelstellung einstellbar. Falls erforderlich, können auch die inneren Klappen 4 zur Verbesserung der Lenkwirkung in ihrer Winkelstellung verstellbar ausgebildet sein.

An der Unterseite des Containers 1 ist ein aufgeblasener Rahmen 7 aus einem Rundschlauch befestigt, von dem aus sich gekrümmt verlaufende aufgeblasene Stege 8 nach unten erstrecken und für eine konvexe Wölbung einer nach unten offenen Plane 9 sorgen, die unterhalb des Rahmens 7 mit Luftauslaßöffnungen 10 versehen ist.

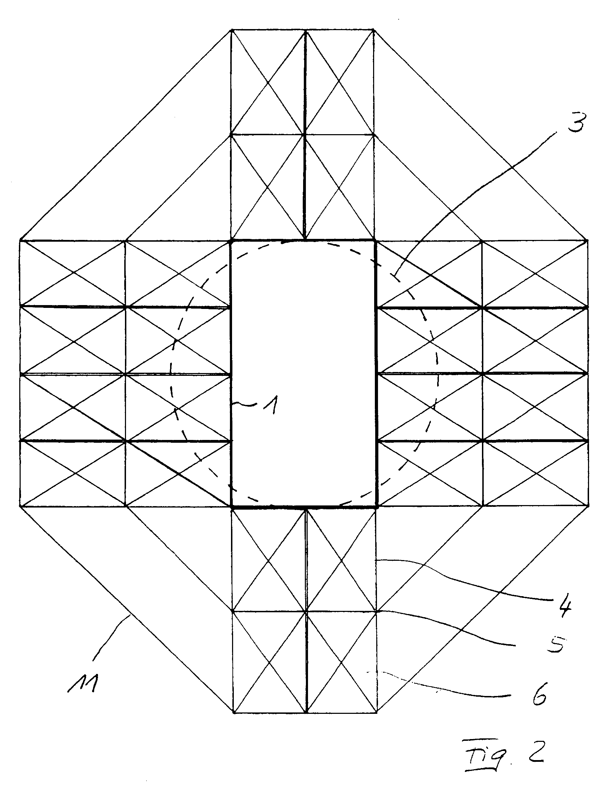

Der Fall des Containers 1 wird durch die Klappen 4, 6 und den Fallschirm 3 gebremst. Die Klappen 4, 6 bestehen vorzugsweise, wie dies in Figur 2 angedeutet ist, aus einem tragenden Rahmen, der mit einem vorzugsweise luftdichten Gewebe bespannt ist. Die Zwischenräume zwischen den Klappen 4, 6 im Bereich der Ecken des Containers 1 sind diagonal mit einem flexiblen Gewebe 11 überspannt, wie dies Figur 2 verdeutlicht. Durch die Winkeleinstellung der Klappen 6 wird die Fallbewegung des Containers 1 gesteuert. Die Steuerung erfolgt durch ein am Container befestigtes Navigationssystem, das vorzugsweise ein Satelliten-Navigationssystem (Global Positioning System - GPS) ist, das für die Flugzeugnavigation eine breite Verwendung gefunden hat.

Durch die die Lenkeinrichtung bildenden Klappen 4, 6, die gleichzeitig - zusammen mit dem flexiblen Gewebe 11 - ein Bremssystem darstellen, wird der Container 1 abgebremst und mit hoher Genauigkeit während des Falls an seinen angestrebten Zielpunkt gebracht. Die restliche Fallgeschwindigkeit wird durch die Plane 9 beim Kontakt mit dem Boden sanft abgebremst, indem das durch die Plane 9 eingeschlossene Luftvolumen im wesentlichen unten und durch die Öffnungen 10 entweicht, wodurch der Behälter 1 nahezu stoßfrei auf dem Boden abgesetzt wird.

Eine besondere stoßgedämpfte Lagerung der in dem Container 1 transportierten Gegenstände, Hilfsgüter und ggf. Menschen ist daher nicht erforderlich.

Der Container 1 ist vorzugsweise zusammenlegbar ausgebildet. Die Klappen 4, 6 können an die Seitenwände des Containers 1 geklappt werden, der aufblasbare Rahmen 7 und die Streben 8 werden drucklos gemacht und lassen sich an den Boden des Containers falten, oder werden als Ganzes demontiert und im Innern des Containers 1, ebenso wie der Fallschirm 3, zusammengefaltet und unter den gegen den Boden geklappten Seitenwänden schonend verstaut. Der zusammengelegte Container 1 läßt sich dann wie eine normale Palette zurücktransportieren und erneut verwenden.

## Patentansprüche

1. Container für den Lufttransport und zum gezielten Abwerfen, für das der Container (1) mit einem Bremssystem und mit einer Lenkeinrichtung in Form von seitlich vom Container abstellbaren Klappen (4,6) versehen ist, **dadurch gekennzeichnet, daß** die Klappen (4,6) mit so großen Flächen von den Containerwänden wegragen, daß sie das Bremssystem des Containers (1) bilden, und daß der Container (1) mit einer Steuerung versehen ist, die ein Navigationssystem und Betätigungsmittel für die Winkelstellung der Klappen (4,6) zur zielgenauen Korrektur der Fallrichtung durch seitliche Richtungsänderungen während des gebremsten Falls des Containers (1) in Abhängigkeit von den Ausgangssignalen des Navigationssystems aufweist.

2. Container nach Anspruch 1, dadurch gekennzeichnet, daß er an seiner Unterseite mit einem unter höchstens einem geringen Überdruck stehenden großvolumigen Schockaabsorber (7 bis 10) versehen ist.

3. Container nach Anspruch 2, dadurch gekennzeichnet, daß der Schockabsorber durch eine unten offene überdrucklose Plane (9) gebildet ist, die von einem aufblasbaren Stützgerüst (7,8) in einer nach unten konvex gewölbten Form gehalten wird.

4. Container nach Anspruch 3, dadurch gekennzeichnet, daß die Plane (9) mit Luftauslaßlöchern (10), vorzugsweise in ihrem oberen Bereich, versehen ist.

5. Container nach Anspruch 3 oder 4, dadurch gekennzeichnet, daß das aufblasbare Stützgerüst (7,8) mit einem so geringen Überdruck aufgeblasen ist, daß es beim Aufprall des Containers schnell kollabiert.

6. Container nach einem der Ansprüche 1 bis 5, gekennzeichnet durch einen an ihm befestigten Fallschirm (3), der so dimensioniert ist, daß er eine schnelle Ausrichtung des Containers (1) in eine stabile Fallage bewirkt und allenfalls ein zusätzliches Bremssystem darstellt.

7. Container nach einem der Ansprüche 1 bis 6, dadurch gekennzeichnet, daß die Klappen (4,6) im wesentlichen in der oberen Hälfte des Containers (1) oder über dem Container (1) wirksam sind.

8. Container nach einem der Ansprüche 1 bis 7, dadurch gekennzeichnet, daß die Klappen (4,6) auf allen vier Seiten des Containers (1) mehrteilig ausgebildet sind.

9. Container nach einem der Ansprüche 1 bis 8, dadurch gekennzeichnet, daß die Klappen (4,6) mit die Luftströmung verwirbelnden Einrichtungen versehen sind.

10. Container nach einem der Ansprüche 1 bis 9, dadurch gekennzeichnet, daß die Klappen (4,6) durch stabile verstellbare Gestellteile gebildet sind, über die ein flexibles Gewebe gespannt ist.

11. Container nach einem der Ansprüche 1 bis 10, dadudrch gekennzeichnet, daß die Zwischenräume zwischen den Klappen (4,6) durch ein flexibles Gewebe (11) überspannt sind.

12. Container nach einem der Ansprüche 1 bis 11, dadurch gekennzeichnet, daß das Navigationssystem ein Global Positioning System-Gerät ist.

13. Container nach einem der Ansprüche 1 bis 12, dadurch gekennzeichnet, daß die Betätigungsmittel hydraulisch, pneumatisch oder elektrisch auf die Lenkeinrichtung wirken.

14. Container nach einem der Ansprüche 1 bis 13, dadurch gekennzeichnet, daß an ihm alle Teile befestigt sind.

15. Container nach einem der Ansprüche 1 bis 14, dadurch gekennzeichnet, daß er zusammenlegbar ist und im zusammengelegten Zustand alle an ihm befestigten Teile an ihm anliegen.

16. Container nach einem der Ansprüche 1 bis 15, gekennzeichnet durch an ihm befestigte optische und/oder akustischer Signaleinrichtungen.

## Claims

1. Container for air transport and for targeted dropping, for which latter purpose the container (1) is provided with a braking system and with a steering arrangement in the form of flaps (4, 6) which can be put down laterally from the container, **characterised in that** the flaps (4, 6) project away from the container walls via surfaces which are of a size such that they form the braking system for the container (1), and **in that** the container (1) is provided with a control system which has a navigation system and actuating means for the angular position of the flaps (4, 6) for the purpose of accurately targeted correction of the direction of falling by lateral changes in direction during the braked fall of the container (1) in dependence upon the output signals of the navigation system.

2. Container according to claim 1, characterised in that it is provided, on its underside, with a large-volume shock-absorber (7 to 10) which is under, at most, a slight excess pressure.

3. Container according to claim 2, characterised in that the shock-absorber is formed by a downwardly open tarpaulin (9) devoid of excess pressure, which is held in a downwardly open, convexly curved shape by an inflatable supporting structure (7, 8).

4. Container according to claim 3, characterised in that the tarpaulin (9) is provided, preferably in its upper region, with air outlet holes (10).

5. Container according to claim 3 or 4, characterised in that the inflatable supporting structure (7, 8) is inflated at an excess pressure which is so slight that the said structure collapses rapidly when the container strikes the ground.

6. Container according to one of claims 1 to 5, characterised by a parachute (3) which is fastened to the said container and is so dimensioned that it brings about the rapid orientation of the container (1) into a stable falling position and, if need be, represents an additional braking system.

7. Container according to one of claims 1 to 6, characterised in that the flaps (4, 6) are essentially operative in the upper half of the container (1) or above the said container (1).

8. Container according to one of claims 1 to 7, characterised in that the flaps (4, 6) are of multi-part construction on all four sides of the container (1).

9. Container according to one of claims 1 to 8, characterised in that the flaps (4, 6) are provided with arrangements which render the airflow turbulent.

10. Container according to one of claims 1 to 9, characterised in that the flaps (4, 6) are formed by stable, adjustable frame parts over which a flexible fabric is stretched.

11. Container according to one of claims 1 to 10, characterised in that the intervening spaces between the flaps (4, 6) are spanned by a flexible fabric (11).

12. Container according to one of claims 1 to 11, characterised in that the navigation system is a global positioning system equipment.

13. Container according to one of claims 1 to 12, characterised in that the actuating means act upon the steering arrangement hydraulically, pneumatically or electrically.

14. Container according to one of claims 1 to 13, characterised in that all the parts are fastened to it.

15. Container according to one of claims 1 to 14, characterised in that it can be folded together and, in the folded-together condition, all the parts fastened to it are adjacent to it.

16. Container according to one of claims 1 to 15, characterised by visual and/or acoustic signalling arrangements which are fastened to it.

## Revendications

1. Conteneur pour le transport aérien et le largage ciblé, pour lequel le conteneur (1) est muni d'un système de freinage et d'un dispositif de gouverne sous la forme de volets (4, 6) pouvant être écartés latéralement du conteneur, caractérisé en ce que les volets (4,6) dépassent des parois du conteneur par des faces suffisamment grandes pour qu'ils constituent le système de freinage du conteneur (1), et en ce que le conteneur (1) est muni d'une commande qui comporte un système de navigation et des moyens d'actionnement pour la position angulaire des volets (4, 6) pour la correction précise de la direction de chute par des modifications d'orientation latérale pendant la chute freinée du conteneur (1) en fonction des signaux de sortie du système de navigation.

2. Conteneur selon la revendication 1, caractérisé en ce qu'il est muni en son côté inférieur, d'un amortisseur de chocs à grand volume (7 à 10), se trouvant au maximum sous une légère surpression.

3. Conteneur selon la revendication 2, caractérisé en ce que l'amortisseur de chocs est constitué par une bâche (9) sans surpression, ouverte vers le bas, qui est maintenue en forme bombée convexe vers le bas par une armature d'appui gonflable (7, 8).

4. Conteneur selon la revendication 3, caractérisé en ce que la bâche (9) est munie de trous de sortie d'air (10), de préférence dans sa zone supérieure.

5. Conteneur selon la revendication 3 ou 4, caractérisé en ce que l'armature d'appui gonflable (7, 8) est gonflée avec une surpression suffisamment faible pour s'affaisser rapidement lors de l'impact du conteneur.

6. Conteneur selon l'une des revendications 1 à 5, caractérisé en ce qu'il lui est fixé un parachute (3) qui est dimensionné pour produire un alignement rapide du conteneur (1) dans une position de chute stable et qui représente tout au plus un système de freinage additionnel.

7. Conteneur selon l'une des revendications 1 à 6, caractérisé en ce que les volets (4, 6) agissent pour l'essentiel dans la moitié supérieure du conteneur (1) ou au-dessus du conteneur (1).

8. Conteneur selon l'une des revendications 1 à 7, caractérisé en ce que les volets (4, 6) sont réalisés en plusieurs parties sur tous les quatre côtés du conteneur (1).

9. Conteneur selon l'une des revendications 1 à 8, caractérisé en ce que les volets (4, 6) sont munis de moyens faisant tourbillonner l'écoulement d'air.

10. Conteneur selon l'une des revendications 1 à 9, caractérisé en ce que les volets (4, 6) sont constitués par des parties de châssis réglables stables, sur lesquelles est tendue une toile flexible.

11. Conteneur selon l'une des revendications 1 à 10, caractérisé en ce que les intervalles entre les volets (4, 6) sont couverts par une toile flexible (11).

12. Conteneur selon l'une des revendications 1 à 11, caractérisé en ce que le système de navigation est un appareillage à système de positionnement global ("Global Positioning System").

13. Conteneur selon l'une des revendications 1 à 12, caractérisé en ce que les moyens d'actionnement agissent hydrauliquement, pneumatiquement ou électriquement sur le dispositif de gouverne.

14. Conteneur selon l'une des revendications 1 à 13, caractérisé en ce que toutes les pièces lui sont fixées.

15. Conteneur selon l'une des revendications 1 à 14, caractérisé en ce qu'il est repliable et en ce qu'à l'état replié toutes les pièces qui lui sont fixées lui sont adjacentes.

16. Conteneur selon l'une des revendications 1 à 15, caractérisé par des moyens de signalisation optiques et/ou acoustiques qui lui sont fixés.
